# EUROPEAN PATENT APPLICATION

(11) **EP 1 316 926 A2**
(43) Date of publication of application: **04.06.2003**
(21) Application number: 02014445.7
(22) Date of filing: 28.06.2002
(51) Int. Cl.: G07F 7/10, G06F 9/445

(54) **Card system, method for installing an application in a card, and method for confirming application execution**

(30) Priority: 30.11.2001 JP 2001365794
(71) Applicant: Hitachi, Ltd., Chiyoda-ku, Tokyo 101-8010 (JP)
(72) Inventor: Matsui, Yukata, Hitachi, Ltd., I.P.G, Chiyoda-ku, Tokyo 100-8220 (JP); Mishina, Yusuke, Hiachi, Ltd. I.P.G, Chiyoda-ku, Tokyo 100-8220 (JP)
(74) Representative: Strehl Schübel-Hopf & Partner

(57) **Abstract**

A system is presented for installing a valid application in an IC card without newly issuing an IC card and without an application installation privilege certificate.

A terminal device forwards to a confirmation card an application and pre-calculated tamper-free confirmation information derived from the application obtained from a server. The confirmation card re-calculates tamper-free confirmation information from the forwarded application. The presence of tampering in the forwarded application is determined by comparing the pre-calculated tamper-free confirmation information with the tamper-free confirmation information re-calculated from the forwarded application. The result of the determination is sent to the terminal device. If the application has not been tampered with, the terminal device installs the application in the execution card.

## Description

The present invention relates to a card system and a card, e.g., an IC card. More specifically, the present invention relates to a technology for checking an execution privilege for an application installed in a card by using another card.

### BACKGROUND OF THE INVENTION

**[04]** Recent years have seen the growing use of "multi-application integrated circuit (IC) cards" in which multiple applications can be installed. When issued, these cards require card activation data created by a card administrator or a card issuer. Also, installing an application requires an installation permission certificate created by a card administrator or a card issuer. As a result of requiring the participation of a card administrator or a card issuer, the process of issuing new cards and installing applications involves significant time and effort as well as associated expenses.

**[05]** In addition, providing different IC card application execution privileges for different users requires the installation of applications that have been customized for individual users. Installation of such customized applications also involves significant time and effort as well as associated expenses.

**[06]** Japanese laid-open patent publication number 2000-29996 describes execution privilege management for functions shared by a group of IC cards.

[07] The object of the present invention is to install a valid application to a card without card activation data or an installation permission certificate provided by a card administrator or a card issuer.

[08] Another object of the present invention is to allow application execution privileges to be set up for individual card users without installing newly customized applications or issuing new cards.

### BRIEF SUMMARY OF THE INVENTION

[09] The present invention is a method for installing an application from a terminal device to a first card. An application and tamper-free confirmation information calculated from the application are sent from the terminal device to a second card. The second card calculates the tamper-free confirmation information from the application and checks for tampering of the application by comparing a calculation result and the received tamper-free confirmation information. The application is installed in the first card via the terminal device if there is no tampering in the application.

[10] Also, when an application installed in the first card is to be executed on the first card, execution privilege confirmation information installed in the second card is sent to the first card via the terminal device. The first card performs execution of the application in a branching manner depending on this received execution privilege confirmation information.

**[11]** A further understanding of the nature and advantages of the present invention may be realized by reference to the remaining portions of the specification and the drawings.

### BRIEF DESCRIPTION OF THE DRAWINGS

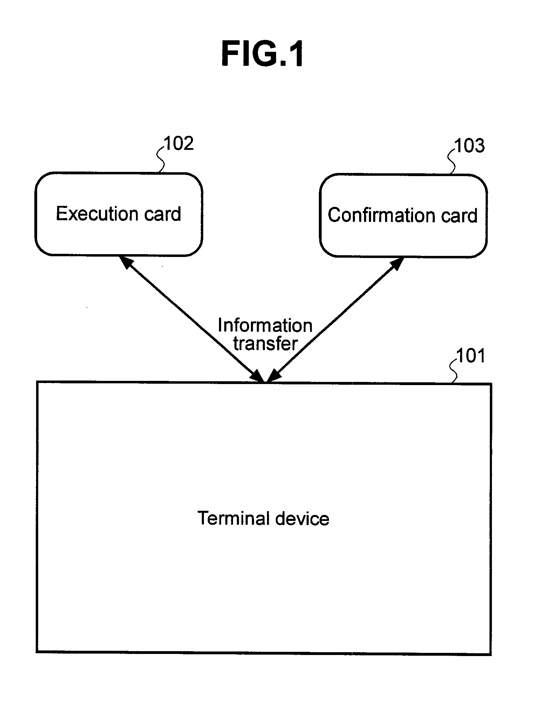

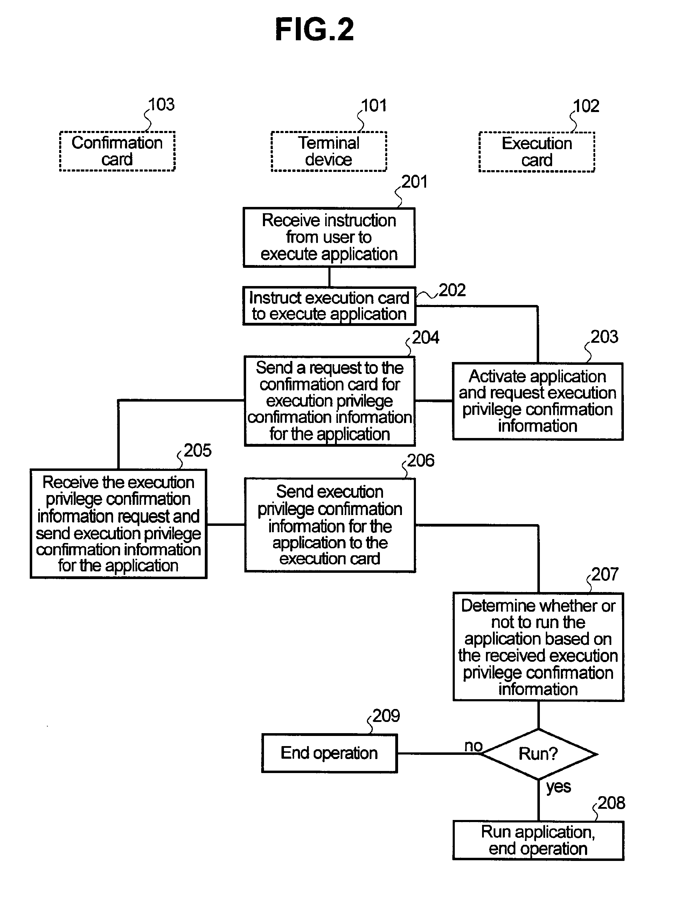

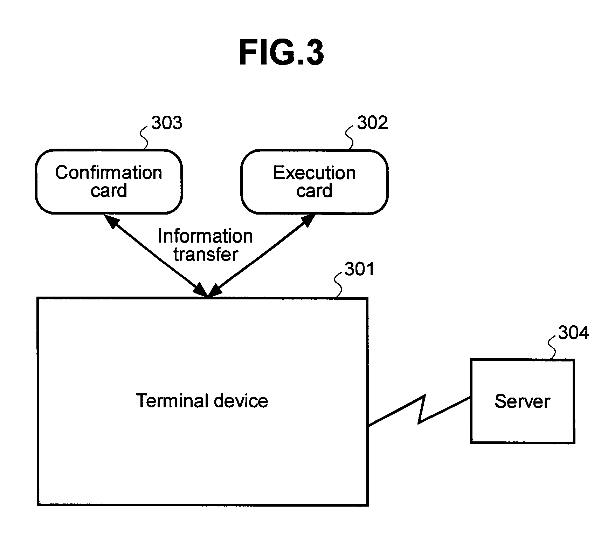

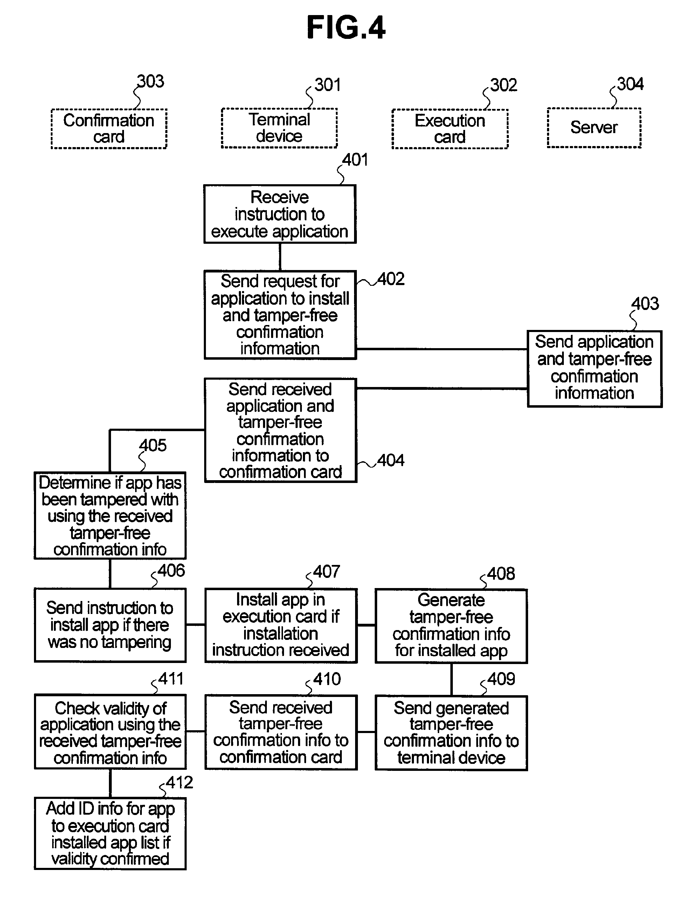

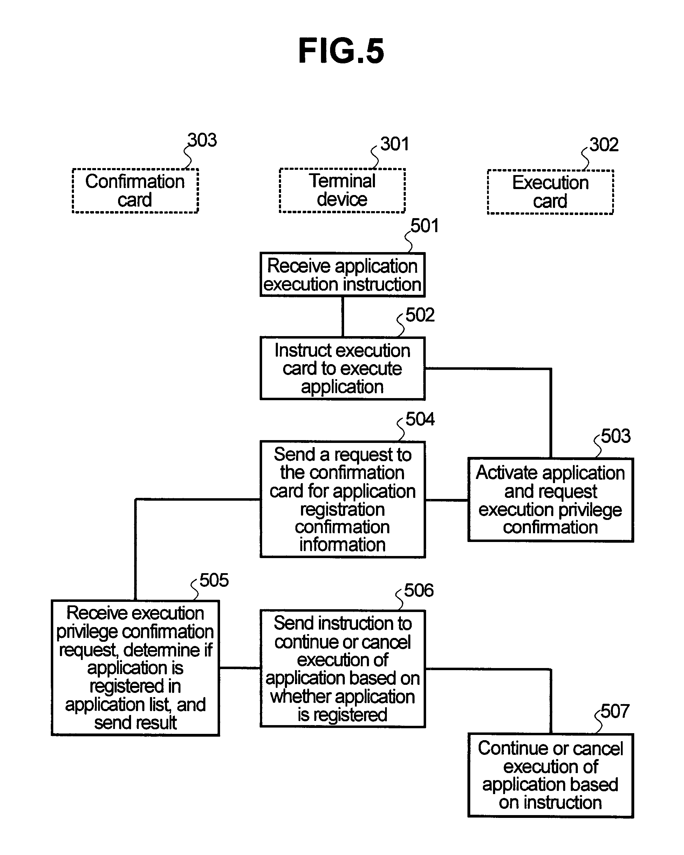

[12] Fig. 1 is a generalized diagram of the system architecture of a first embodiment of the present invention;
[13] Fig. 2 is a flowchart showing operations performed in the first embodiment;
[14] Fig. 3 is a generalized diagram of the system architecture of a second embodiment of the present invention;
[15] Fig. 4 is a flowchart showing the operations performed when installing an application in the second embodiment; and
[16] Fig. 5 is a flowchart showing the operations performed when executing an application in the second embodiment.

### DETAILED DESCRIPTION OF THE INVENTION

**[17]** Various embodiments of the present invention will be described in detail using the drawings.

[18] Fig. 1 is a generalized diagram showing the architecture of an IC card system according to the first embodiment of the present invention. This system includes a terminal device 101, an execution card 102, and a confirmation card 103. The terminal device 101 is a general-purpose computer such as a personal computer, a dedicated computer performing predetermined tasks, or another type of dedicated terminal device. The terminal device 101 is equipped with a processor, memory, an input device, a display device, and a card reader/writer for reading data from and writing data to the execution card 102 and the confirmation card 103. Application programs for predetermined tasks using the card are stored in the memory and are executed by the processor of the terminal device.

[19] The execution card 102 and the confirmation card 103 are IC cards equipped with at least one semiconductor chip with a processor, memory, and an I/O interface feature for communicating with the terminal device 101. A control program and application programs are stored in the memory and executed by the processor. The confirmation card 103 contains a program that sends specified information to the terminal device 101 when execution permission confirmation information is requested by the terminal device 101. The execution card 102 contains at least one application that works with an application program of the terminal device 101 to support tasks of the terminal device 101. The confirmation card 103 is an official IC card issued by a card issuer. The execution card 102 is either an IC card issued by the card issuer or, as similar to the execution card 302 of the second embodiment described later, an IC card for which there is no card issuer. Such a card with no card issuer may be a blank card that is purchased with no pre-installed application programs.

[20] Fig. 2 is a flowchart showing operations performed by the terminal device 101, the execution card 102, and the confirmation card 103. Note that each operation is graphically presented as a block positioned beneath the apparatus (terminal device 101, execution card 102, or confirmation card 103) that performs the operation. The terminal device 101 receives from a user (the operator of the input device of the terminal device 101 or an application in the terminal device 101) an execution instruction for a specific application (AP) stored in the execution card 102 (step 201). The terminal device 101 sends the execution card 102 an execution instruction for the application specified by the user (step 202). The execution card 102 receives the instruction from the terminal device 101 and activates the specified application. The activated application sends the terminal device 101 a request for execution privilege confirmation information that is needed to run the application (step 203). The terminal device 101 sends the confirmation card 103 the execution privilege confirmation information request received from the execution card 102 (step 204).

[21] The confirmation card 103 receives this execution privilege confirmation request and sends the requested execution privilege confirmation information stored in the memory of the confirmation card 103 to the terminal device 101 (step 205). If the confirmation card 103 stores values for multiple data fields, e.g., date of birth and age, tags indicating the desired data fields can be used to make the execution privilege confirmation information request. In this case, these data field values would be the execution privilege confirmation information. The terminal device 101 sends the execution privilege confirmation information received from the confirmation card 103 to the execution card 102 (step 206). Based on this execution privilege confirmation information, the execution card 102 determines whether or not to continue to run the application (step 207). If so, the application continues until completion and then ends operation (step 208). Otherwise, the terminates and ends operation (step 209). In other words, the operations branch out between step 208 and step 209 depending on the execution privilege confirmation information.

**[22]** The transfer of information between the execution card 102 and the confirmation card 103 via the terminal device 101 takes place using a system that prevents eavesdropping and tampering.

[23] Next, a method for disabling scrambling when receiving a pay television broadcast will be described as a specific example of the first embodiment. The execution card 102 is an IC card containing an application for disabling scrambling. The confirmation card 103 is a card storing information proving the date of birth and age of the user (card holder), e.g., an identification IC card or driver's license IC card. The terminal device 101 is a television receiver. When a descrambling application for programs or channels that have restrictions on the viewer's age, the descrambling application on the execution card 102 confirms the viewer's age by requesting and obtaining the date of birth or age confirmation information stored in the confirmation card 103. The execution card 102 then determines whether or not to execute the descrambling function.

[24] In accordance with the first embodiment, application execution privileges can be set up by the card user without requiring the loading of customized applications or issuing of new cards.

[25] Fig. 3 shows the architecture of an IC card system according to a second embodiment of the present invention. This system is formed from a terminal device 301, an execution card 302, a confirmation card 303, and a server 304. The terminal device 301 is a terminal device similar to the terminal device 101 and executes applications for predetermined tasks that use a card. The execution card 302 is similar to the execution card 102 and stores at least one application for supporting the tasks of the terminal device 301. In this case, the execution card 302 does not require an installation privilege certificate provided by a card administrator or a card issuer to install applications and is an IC card for which there is no card issuer. The confirmation card 303 is an IC card with an application for confirming the validity of an application installed in the execution card 302. The confirmation card 303 can also contain an application for supporting tasks of the terminal device 301 or the like, as in the execution card 302. The confirmation card 303 is similar to the confirmation card 103 and is an official IC card issued by a card issuer. The server 304 is a computer connected to the terminal device 301 via a network and provides applications to be installed on the execution card 302.

**[26]** In the second embodiment, if additional applications cannot be installed in the confirmation card 303 due to insufficient memory, the additional application is installed in the execution card 302 and the confirmation card 303 is used to confirm its validity.

[27] The execution card 302 is equipped with the following functions:

[28] (1) A function for securely exchanging data with the confirmation card 303, e.g., storing an encryption key and encrypting with the key.

**[29]** (2) A function for creating information used to confirm that an application has not been tampered with. This information can be, for example, a hash value such as SHA-1.

[30] It is assumed that a user downloading an application from the terminal device 301 to the execution card 302 already owns a card issued by the card issuer. This card corresponds to the confirmation card 303. The confirmation card 303 has the following requirements.

[31] (1) The presence of a function for creating information used to confirm that an application has not been tampered with, e.g., a hash value such as SHA-1.

[32] (2) The ability to exchange data securely with the server 304, e.g., using encryption with an encryption key.

[33] (3) The ability to store a list of application of identification information installed in the execution card 302.

[34] (4) The ability to exchange data securely with the execution card 302, e.g., using encryption with an encryption key.

[35] Since applications can be installed in the execution card 302 without an installation privilege certificate provided by a card administrator or a card issuer, it is important for the application provider that the provided application is installed in the execution card 302 without tampering. When an application is installed in the execution card 302, the confirmation card 303 is used to check that the application has not been tampered with. A list of installed applications is stored in the confirmation card 303. When an application is executed, the execution is performed using the confirmation card 303. Thus, applications are executed after confirmation that the applications have been installed without any tampering.

**[36]** Fig. 4 is a flowchart showing the operations performed by the terminal device 301, the execution card 302, the confirmation card 303, and the server 304 when an application is installed in the execution card 302. Note that each operation is graphically presented as a block positioned beneath the apparatus (terminal device 301, execution card 302, or confirmation card 303) that performs the operation.

[37] The terminal device 301 receives an instruction to install a specific application from the user (step 401). The terminal device 301 sends a request via the network to the server 304 for (1) the application to be installed and (2) tamper-free confirmation information that can later be used by the confirmation card to confirm that the application has not been tampered with (step 402). An example of such tamper-free confirmation information is a hash value of the application program that has been encrypted with an encryption key and can only be decrypted by the confirmation card.

[38] The server 304 sends the terminal device 301 the requested application and tamper-free confirmation information (step 403). The terminal device 301 sends the confirmation card 303 the application program sent at step 403 and the tamper-free confirmation information (step 404).

[39] The confirmation card 303 independently calculates the tamper-free confirmation information using the received application. The result of this calculation is compared with the received tamper-free confirmation information to confirm whether or not the received application has been tampered with (step 405). If step 405 confirms that the application has not been tampered with, an instruction to install the application in the execution card 302 is sent to the terminal device 301 (step 406). If step 405 confirms that the application has been tampered with, an instruction to cancel installation of the application in the execution card 302 is sent to the terminal device 301.

[40] The terminal device 301 receives the application installation instruction and sends the application to the execution card 302 (step 407). The execution card 302 installs the received application in memory and creates information used to confirm that the installed application has not been tampered with (step 408). Next, the execution card 302 sends the terminal device 301 the tamper-free confirmation information generated at step 408 (step 409). The terminal device 301 receives application and the tamper-free confirmation information for the application that was sent by the execution card 302 at step 409, and sends these to the confirmation card 303 (step 410).

[41] The confirmation card 303 compares the tamper-free confirmation information received from the terminal device 301 at step 410 and the tamper-free confirmation information calculated at step 405 to confirm that the application installed in the execution card 302 has not been tampered with (step 411). If the confirmation card 303 is able to confirm at step 411 that the application installed in the execution card 302 has not been tampered with, identification information for the application is added to the execution card installed applications list of the confirmation card 303 (step 412).

[42] Along with the application identification information, the confirmation card 303 can register the card number of the execution card 302 in the application list. Such a card number can allow the confirmation card 303 to uniquely identify the execution card 302 so that is not confused with other cards. Also, the server 304 can be eliminated if the terminal device 301 itself stores the application and the tamper-free confirmation information.

[43] It would also be possible to immediately register the application in the application list (previously performed in step 412) if no tampering of the application is found at step 405. In addition, step 410 may be modified such that the terminal device 301 does not send the tamper-free confirmation information received from the execution card 302 to the confirmation card 303, but instead compares it to the tamper-free confirmation information received from the server 304 at step 404. Here, the modified step 410 requires the terminal device 301 to be able to decrypt the tamper-free confirmation information received from the server 304, if such information is encrypted.

[44] If the validity of the application cannot be confirmed at step 410, the terminal device 301 passes the confirmation card 303 through the card reader/writer of the terminal device 301 and instructs the confirmation card 303 to remove the application registered at step 406 from the list. If the application registered in the execution card 302 is valid, the lists does not need to be modified, and the confirmation card need only be passed through the card reader/writer once. Alternatively, assuming that the validity of the application was confirmed at step 406, the application can be registered in the application list as in step 412, the terminal device 301 can install the application in the execution card 302 at step 407, and step 408 through step 411 can be omitted.

[45] Fig. 5 shows a flowchart of the operations performed by the terminal device 301, the execution card 302, and the confirmation card 303 when an application installed in the execution card 302 is to be executed and confirmation is to be made that the application has been registered in the application list in the confirmation card 303. Again note that each operation is graphically presented as a block positioned beneath the apparatus (terminal device 301, execution card 302, or confirmation card 303) that performs the operation. The terminal device 301 receives from the user an instruction to execute a particular application stored in the execution card 302 (step 501). The terminal device 301 sends an instruction to execute the indicated application to the execution card 302 (step 502). The execution card 302 sends the terminal device 301 a request for application registration confirmation information, in order to query whether the application is registered in the confirmation card 303 (step 503). This application registration confirmation information request includes an identifier for the indicated application. A card number for the execution card 302 can also be included. The terminal device 301 sends to the confirmation card 303 the application registration confirmation information request received from the execution card 302 (step 504).

[46] The confirmation card 303 receives this application registration confirmation information request, determines whether the application contained in this request is registered in the application list in the execution card, and sends the result to the terminal device 301 (step 505). Based on whether the application is registered in the confirmation card 303, the terminal device 301 instructs the execution card 302 to continue or cancel execution (step 506). The execution card 302 receives this instruction and continues or cancels the application (step 507). Alternatively, the execution card 302 performs a different branching operation (other than continue or cancel) in response to this instruction. It would also be possible to eliminate step 502 and step 503 and to instead have the terminal device 301 itself send the execution privilege confirmation request to the confirmation card 303 at step 504. In this case, at step 506 the terminal device 301 determines whether or not send an application execution instruction to the execution card 302. As a result, the execution card 302 need only be passed through the card reader/writer once.

[47] According to the second embodiment, if the IC card belonging to the card user has insufficient memory for installing an additional application, the application can be installed in an execution card that was not officially issued, and the validity of the application can be confirmed by using the card user's original IC card (as a confirmation card). Also, the validity of the application can be confirmed each time the application is executed. As a result, tampering of applications can be prevented even if a card has not been officially issued or there is no application installation privilege certificate. The second embodiment can also be used if the execution card 302 has insufficient memory to install an additional application.

**[48]** With the present invention as described above, valid applications can be installed in a card even without a card being issued or an installation privilege certificate provided by a card administrator or a card issuer. Thus, the time and expenses required by the conventional technology to have a card issued and to obtain an installation privilege certificate can be eliminated. Also, if a card has insufficient memory to install an additional application, the time and expenses required in issuing a new card can be eliminated. Furthermore, application execution privileges can be customized on a per-user basis without requiring a new application to be installed or a new card to be issued, and the associated time and expenses can be eliminated.

[49] Although the present invention has been described in terms of specific embodiments, it should be apparent to those skilled in the art that the scope of the present invention is not limited to the described specific embodiments. The specification and drawings are, accordingly, to be regarded in an illustrative rather than a restrictive sense. It will, however, be evident that additions, subtractions, substitutions, and other modifications may be made without departing from the broader spirit and scope of the invention as set forth in the claims.

## Claims

1. A method for executing an application installed in a first card comprising the following steps:
forwarding execution privilege confirmation information stored on a second card to said first card via a terminal device; and
branching to one of at least two alternative paths of execution in said application depending on said forwarded execution privilege confirmation information.

2. The method of claim 1, wherein said execution privilege confirmation information relates to personal information regarding a user of said second card.

3. A method for installing an application from a terminal device to a first card comprising the following steps:
forwarding an application and pre-calculated tamper-free confirmation information derived from said application, from said terminal device to a second card;
at said second card, re-calculating tamper-free confirmation information from said forwarded application and checking for tampering of said forwarded application by comparing said pre-calculated tamper-free confirmation information and said tamper-free confirmation information re-calculated from said forwarded application; and
installing said application in said first card via said terminal device if no tampering of said application is detected.

4. The method of claim 3, wherein said application and pre-calculated tamper-free confirmation information forwarded from said terminal device to said second card is initially obtained from a server coupled to said terminal device.

5. The method of claim 3, wherein said pre-calculated tamper-free confirmation information is a hash value of said application that has been encrypted with an encryption key, and wherein said second card is capable is decrypting said encryption.

6. The method as described in claim 3 further comprising the following steps:
at said first card, re-calculating tamper-free confirmation information from said installed application;
forwarding said tamper-free confirmation information re-calculated from said installed application to said second card via said terminal device;
at said second card, comparing said tamper-free confirmation information re-calculated from said installed application with said pre-calculated tamper-free confirmation information to check for tampering of said installed application; and
if no tampering of said installed application is detected, registering identification information corresponding to said installed application on an application list in said second card.

7. The method of claim 6, wherein said registering step further comprises registering identification information corresponding to said first card if no tampering of said installed application is detected.

8. The method as described in claim 6 further comprising the following steps:
when execution of said installed application on said first card is requested, forwarding said identification information corresponding to said installed application, from said terminal device to said second card;
determining at said second card whether said forwarded identification information has been registered on said application list in said second card;
forwarding results of said determining step to said terminal device; and
if said results indicate that said forwarded identification information has been registered on said application list in said second card, instructing from said terminal device for said first card to execute said installed application.

9. A method for installing an application from a terminal device to a first card comprising the following steps:
forwarding an application and pre-calculated tamper-free confirmation information derived from said application, from said terminal device to a second card;
at said second card, re-calculating tamper-free confirmation information from said forwarded application and checking for tampering of said application by comparing said pre-calculated tamper-free confirmation information and said tamper-free confirmation information re-calculated from said forwarded application; and
if no tampering of said application is detected, installing said application in said first card via said terminal device and registering identification information corresponding to said installed application on an application list in said second card.

10. The method as described in claim 9 further comprising the following steps:
at said first card, re-calculating tamper-free confirmation information from said installed application;
forwarding said tamper-free confirmation information re-calculated from said installed application to said terminal device;
at said terminal device, comparing said tamper-free confirmation information re-calculated from said installed application with said pre-calculated tamper-free confirmation information to check for tampering of said installed application; and
if tampering of said installed application is detected, removing said registered identification information corresponding to said installed application from said application list in said second card.

11. A method for executing an application in a first card comprising the following steps:
forwarding to a second card identification information corresponding to said application;
determining at said second card whether said forwarded identification information has been registered on an application list in said second card; and
if results of said determining step indicate that said identification information has been registered on said application list in said second card, executing said application in said first card.

12. In a card system including a first card in which an application has been installed, a second card, and a terminal device capable of communicating with said first and second cards, the improvement comprising:
forwarding an execution privilege confirmation information request from said first card to said second card via said terminal device;
in response to said request, forwarding execution privilege confirmation information from said second card to said first card via said terminal device; and
branching to one of at least two alternative paths of execution in said application based on said forwarded execution privilege confirmation information.

13. In a card system including a first card in which an application is to be installed, a second card, and a terminal device capable of communicating with said first and second cards, the improvement comprising:
means in said terminal device for forwarding to said second card said application and pre-calculated tamper-free confirmation information derived from said application and for forwarding said application to said first card;
means in said second card for re-calculating tamper-free confirmation information from said forwarded application, for checking for tampering of said application by comparing said pre-calculated tamper-free confirmation information and said tamper-free confirmation information re-calculated from said forwarded application, and for sending an instruction to said terminal device to install said application in said first card if no tampering of said application has been detected; and
means in said first card for installing said application forwarded from said terminal device.

14. A system as described in claim 13 further comprising:
means in said first card for calculating tamper-free confirmation information from said installed application and for sending said tamper-free confirmation information re-calculated from said installed application to said terminal device;
means in said terminal device for forwarding said tamper-free confirmation information re-calculated from said installed application to said second card; and
means in said second card for checking whether said installed application has been tampered with by comparing said pre-calculated tamper-free confirmation information with said tamper-free confirmation information re-calculated from said installed application and for registering identification information corresponding to said installed application if said installed application has not been tampered with.

15. A system as described in claim 14 further comprising:
means in said terminal device for forwarding said identification information corresponding to said application to said second card and for instructing execution of said application installed in said first card when a registration notification for said application is received from said second card;
means in said second card for determining whether said forwarded identification information is registered in said second card and for sending said registration notification to said terminal device if said forwarded identification information is determined to be registered in said second card; and
means in said first card for executing said installed application when said execution instruction is received from said terminal device.

16. A computer program product for a processor in a first card comprising:
a computer usable medium having computer readable program code means embodied therein for causing an application to be conditionally executed on said first card, the computer readable program code means in said computer program product comprising:
computer readable program code means for forwarding an execution privilege confirmation information request to a second card; and
computer readable program code means for branching to one of at least two alternative paths of execution in said application in response to said request.

17. A computer program product for a processor in a second card comprising:
a computer usable medium having computer readable program code means embodied therein for causing an application to be installed on a first card, the computer readable program code means in said computer program product comprising:
computer readable program code means for receiving an application and pre-calculated tamper-free confirmation information derived from said application from a terminal device;
computer readable program code means for re-calculating tamper-free confirmation information from said forwarded application;
computer readable program code means for checking for tampering of said application by comparing said pre-calculated tamper-free confirmation information and said tamper-free confirmation information re-calculated from said forwarded application; and
computer readable program code means for sending said terminal device an instruction to install said application in said first card if no tampering of said application has been detected.

18. The computer program product as described in claim 17, the computer readable program code means in said computer program product further comprising:
computer readable program code means for receiving via said terminal device tamper-free confirmation information re-calculated by said first card from said installed application;
computer readable program code means for checking for tampering of said installed application by comparing said pre-calculated tamper-free confirmation information with said tamper-free confirmation information re-recalculated from said installed application; and
computer readable program code means for registering identification information corresponding to said installed application in an application list if said installed application has not been tampered with.

19. The computer program product as described in claim 18, the computer readable program code means in said computer program product further comprising the following means :
computer readable program code means for receiving identification information corresponding to said application from said terminal device;
computer readable program code means for determining whether said identification information has been registered in said application list and sending results to said terminal device; and
wherein if said results indicate that said received identification has been registered in said application list, said terminal device instructs said first card to execute said application.

20. In a terminal device passing information back and forth with a first card and a second card, the improvement comprising:
means for forwarding to said second card an execution privilege confirmation information request received from said first card on which an application is installed;
means for forwarding from said second card to said first card execution privilege confirmation information in response to said request; and
wherein said first card branches to one of at least two alternative paths of execution in said application based on said forwarded execution privilege confirmation information.

21. In a terminal device passing information back and forth with a first card and a second card, the improvement comprising:
means for forwarding said second card an application to be installed in said first card and pre-calculated tamper-free confirmation information derived from said application;
means for receiving information from said second card on whether or not said forwarded application has been tampered with; and
means for installing said application in said first card if said forwarded application has not been tampered with.

22. The terminal device as described in claim 21 further comprising:
means for sending to said second card tamper-free confirmation information re-calculated by said first card from said installed application;
wherein said second card checks for tampering of said installed application by comparing said pre-calculated tamper-free confirmation information with said tamper-free confirmation information re-calculated from said installed application; and
wherein if said installed application has not been tampered with, identification information corresponding to said application is registered in an application list.

23. The terminal device as described in claim 22 further comprising:
means for sending to said second card identification information corresponding to said application; and
means for instructing said first card to execute said installed application if said identification corresponding to said application has been registered in said application list.

24. A computer program product for a processor of a terminal device passing information back and forth with a first card and a second card comprising:
a computer usable medium having computer readable program code means embodied therein for causing an application to be conditionally executed on said first card, the computer readable program code means in said computer program product comprising:
computer readable program code means for forwarding to said second card an execution privilege confirmation information request received from said first card on which an application is installed;
computer readable program code means for forwarding from said second card to said first card execution privilege confirmation information in response to said request; and
wherein said first card branches to one of at least two alternative paths of execution in said application based on said forwarded execution privilege confirmation information.

25. A computer program product for a processor of a terminal device passing information back and forth with a first card and a second card comprising:
a computer usable medium having computer readable program code means embodied therein for causing an application to be installed on said first card, the computer readable program code means in said computer program product comprising:
computer readable program code means for forwarding to said second card an application to be installed in said first card and pre-calculated tamper-free confirmation information derived from said application;
computer readable program code means for receiving from said second card information on whether or not said forwarded application was tampered with; and
computer readable program code means for installing said application in said first card if said application has not been tampered with.

26. The computer program product as described in claim 25, the computer readable program code means in said computer program product further comprising:
computer readable program code means for sending to said second card tamper-free confirmation information re-calculated by said first card from said installed application;
wherein said second card determines whether said installed application has been tampered with by comparing said pre-calculated tamper-free confirmation information with said tamper-free confirmation information re-calculated from said installed application; and
wherein if said installed application has not been tampered with, identification information corresponding to said installed application is registered in an application list.

27. The computer program product as described in claim 26, the computer readable program code means in said computer program product further comprising:
computer readable program code means for sending identification information corresponding to said application to said second card; and
computer readable program code means for instructing said first card to execute said installed application if a notification is received from said second card indicating that said application has been registered in said application list.
